# EUROPEAN PATENT SPECIFICATION

(11) **EP 3 358 142 B1**
(45) Date of publication and mention of the grant of the patent: **18.08.2021**
(21) Application number: 17154387.9
(22) Date of filing: 02.02.2017
(51) Int. Cl.: F01D 11/10

(54) **TURBINE TIP SHROUD LEAKAGE FLOW CONTROL**
KONTROLLE DER SPALTLECKAGE ÜBER EIN TURBINENSCHAUFELDECKBAND
CONTRÔLE DE FUITE À TRAVERS D'UNE VIROLE D'AUBE DE TURBINES

(43) Date of publication of application: 08.08.2018
(73) Proprietor: General Electric Company, Schenectady, NY 12345 (US)
(72) Inventor: HALLER, Brian Robert, Rugby, Warwickshire CV21 2NH (GB); LORD, Adrian Clifford, Rugby, Warwickshire CV21 2NH (GB); HEMSLEY, Philip David, Rugby, Warwickshire CV21 2NH (GB)
(74) Representative: Wesela-Bauman, Grzegorz

(56) References cited:
- WO-A1-2012/052740
- JP-A- S5 313 005
- US-A- 3 034 298
- US-A- 3 597 102
- US-A1- 2009 110 550
- US-A1- 2016 115 815

## Description

### TECHNICAL FIELD

The present application and the resultant patent relate generally to axial flow turbines of any type and more particularly relate to tip balance slits for steam turbines.

### BACKGROUND OF THE INVENTION

Generally described, steam turbines and the like may have a defined steam path that includes a steam inlet, a turbine section, and a steam outlet. Steam leakage, either out of the steam path, or into the steam path from an area of higher pressure to an area of lower pressure, may adversely affect the operating efficiency of the steam turbine. For example, steam path leakage in the steam turbine between a rotating shaft and a circumferentially surrounding turbine casing may lower the overall efficiency of the steam turbine.

Steam may generally flow through a number of turbine stages typically disposed in series through first-stage guide vanes and blades (or nozzles and buckets) and subsequently through guide vanes and blades of later stages of the turbine. In this manner, the guide vanes may direct the steam toward the respective blades, causing the blades to rotate and drive a load, such as an electrical generator and the like. The steam may be contained by circumferential shrouds surrounding the blades, which also may aid in directing the steam along the path. In this manner, the turbine guide vanes, blades, and shrouds may be subjected to high temperatures resulting from the steam, which may result in the formation of hot spots and high thermal stresses in these components. Because the efficiency of a steam turbine is dependent on its operating temperatures, there is an ongoing demand for components positioned along the steam or hot gas path to be capable of withstanding increasingly higher temperatures without failure or decrease in useful life.

JPS5313005A discloses an axial-flow turbine apparatus, in particular a steam turbine, and it relates to the internal structure of a turbine stage suitable for eliminating the adverse effect of leakage flow from the tip of the rotor blade. An outlet of a respective tip balance slit is configured to direct a tip leakage jet from a first stage through a chamber defined between a first diaphragm of a first turbine stage, a second diaphragm of a second turbine stage and a casing and to further direct the tip leakage jet through holes provided in the second diaphragm to the next, third stage so as to route the tip leakage jet around all turbine stages and prevent the tip leakage jet from reentering into the mainstream flow.

US3597102A discloses arrangements for preventing leakage of fluid through a clearance passage defined between a turbine rotor and stator. In an embodiment, steam from an annular reservoir is directed through a duct onto the tip shroud of a first stage rotor blade and through a conduit or passage to the rotor blade of the next stage. The steam is received from a suitable external source of steam. Moreover, the steam is directed onto the tip shroud of the second rotor blade 12 and then out of the second stage through a next conduit to the next third stage.

WO 2012/052740 A1 discloses a fluid leakage path, wherein the leakage flow from a clearance defined between a rotor and a stator is introduced into a series of fluid inlet ports circumferentially arranged between the stator and the rotor of a turbine stage and directed to a circumferentially extending reservoir chamber or conduit in the stator. The leakage flow is then directed at reduced velocity and increased pressure from the reservoir chamber or conduit to a gap defined between the tip shroud of the rotor blade and the stator of the same turbine stage.

US 2009/110550 A1 describes an axial flow turbine stage structure comprising an annular diaphragm inner ring, an annular diaphragm outer ring, an annular flow path interposed between them, stationary blades arranged in the annular flow path and rigidly secured to the diaphragm inner ring and the diaphragm outer ring, and moving blades rigidly secured to the outer periphery of a rotatable rotor and arranged peripherally at intervals respectively at axially downstream sides of the stationary blades. Through holes are formed in the diaphragm outer ring so as to allow axial upstream side and axially downstream side of the stationary blades to communicate with each other. The blade tip leaking fluid that has passed through the gap between the moving blade tips and the stationary blade diaphragm outer ring can pass through the through holes. The stationary blade diaphragm outer ring is provided at the inlet side end and at the outlet side end thereof with ridges that are located near the inner periphery of the outer ring to limit the blade tip leaking fluid branching into the gap between the stationary blade diaphragm outer ring and the tip shroud of the moving blades from the main flow and also the leaking fluid returning to the main flow after branching from the main flow.

US 2016/115815 A1 discloses a turbine in which a bypass-passage extends through a base member of a stationary vane to join seal cavities of adjacent rotating blade rows so that seal flow passing between a casing and shrouds of the rotating blades at least partially bypasses the turbine main flow passage.

In some instances, leakage flow from a mainstream flow path of steam may flow through gaps between components of a turbine engine. Such leakage flow may reduce turbine efficiency and may cause mixing loss, disruption to mainstream flow, incidence onto a subsequent blade row, and/or other losses.

### SUMMARY OF THE INVENTION

According to an aspect of the present invention, there are provided leakage flow control systems for turbines as claimed in independent claims 1 and 2.

According to another aspect of the present invention, there is further provided a method of controlling leakage flow in turbines as claimed in independent claim 6.

According to still another aspect of the present invention there is further provided a steam turbine with a leakage flow control system, as claimed in independent claim 5.

These and other features and improvements of this application and the resultant patent will become apparent to one of ordinary skill in the art upon review of the following detailed description when taken in conjunction with the several drawings and the appended claims.

### BRIEF DESCRIPTION OF THE DRAWINGS

FIG. 1 is a schematic diagram of a steam turbine.
FIG. 2 is a schematic diagram of a portion of a turbine as may be used in the steam turbine of FIG. 1, showing various turbine constructions.
FIG. 3 is a schematic diagram of a portion of a turbine with a leakage flow control system with a tip balance slit as described herein in accordance with one or more embodiments.
FIGS. 4A-4B are schematic diagrams of a portion of a turbine with a leakage flow control system with a tip balance slit as described herein in accordance with one or more embodiments.
FIG. 5 is a schematic diagram of a portion of a turbine with a leakage flow control system with a tip balance slit as described herein in accordance with one or more embodiments.

### DETAILED DESCRIPTION

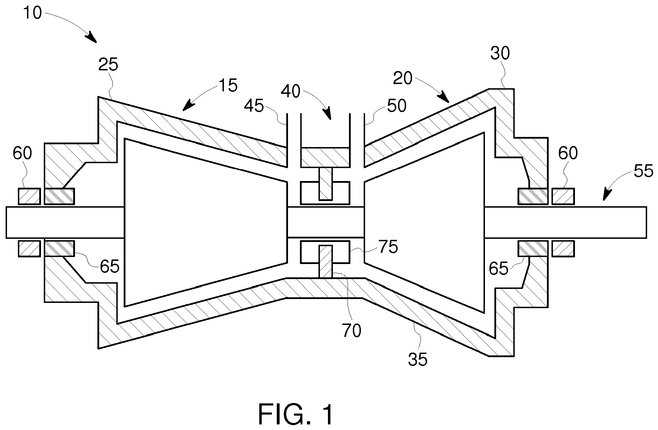

Referring now to the drawings, in which like numerals refer to like elements throughout the several views, FIG. 1 shows a schematic diagram of an example of a steam turbine 10. Generally described, the steam turbine 10 may include a high pressure section 15 and an intermediate pressure section 20. A rotor wheel may extend through the sections 15 and 20. Other pressures in other sections also may be used herein. An outer shell or casing 25 may be divided axially into an upper half section 30 and a lower half section 35. A central section 40 of the casing 25 may include a high pressure steam inlet 45 and an intermediate pressure steam inlet 50. Within the casing 25, the high pressure section 15 and the intermediate pressure section 20 may be arranged about a rotor or disc 55. The disc 55 may be supported by a number of bearings 60. A steam seal unit 65 may be located inboard of each of the bearings 60. An annular section divider 70 may extend radially inward from the central section 40 towards the disc. The divider 70 may include a number of packing casings 75. Other components and other configurations may be used.

During operation, the high pressure steam inlet 45 receives high pressure steam from a steam source. The steam may be routed through the high pressure section 15 such that work is extracted from the steam by rotation of the disc 55. The steam exits the high pressure section 15 and then may be returned to the steam source for reheating. The reheated steam then may be rerouted to the intermediate pressure section inlet 50. The steam may be returned to the intermediate pressure section 20 at a reduced pressure as compared to the steam entering the high pressure section 15 but at a temperature that is approximately equal to the temperature of the steam entering the high pressure section 15. Accordingly, an operating pressure within the high pressure section 15 may be higher than an operating pressure within the intermediary section 20 such that the steam within the high pressure section 15 tends to flow towards the intermediate section 20 through leakage paths that may develop between the high pressure 15 and the intermediate pressure section 20. One such leakage path may extend through the packing casing 75 about the disc shaft 55. Other leaks may develop across the steam seal unit 65 and elsewhere. While discussed in the context of certain embodiments, other embodiments of the disclosure may be used with other methods of turbine construction, such as Reaction Technology Blading (RTB) with drum rotor construction, or instances in which guides and seals may be directly mounted in a casing.

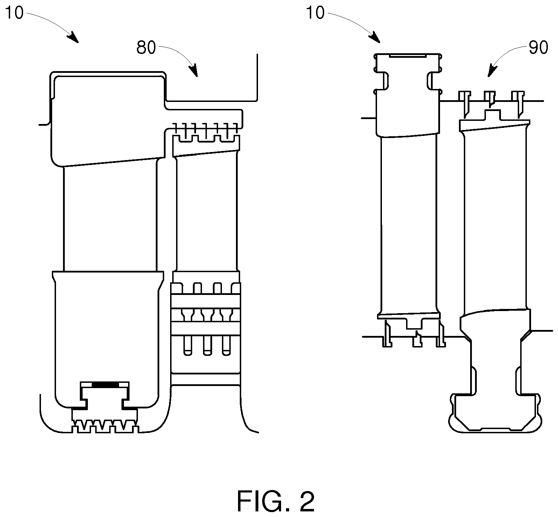

FIG. 2 shows a schematic diagram of various constructions of a portion of the steam turbine 10. The steam turbine 10 may have an impulse construction 80. Turbines with impulse construction may have a low root reaction and a disc and diaphragm construction. As illustrated, the impulse construction 80 may include a guide and a runner adjacent to each other. In other embodiments, the turbine 10 may have reaction technology blading 90. The reaction technology blading 90 may have a reaction drum construction and may include one or more dovetails with the runners. The dovetails may be used to secure the respective runners to the drum. Certain embodiments may be used with impulse and reaction technology blading. Other embodiments may have different configurations.

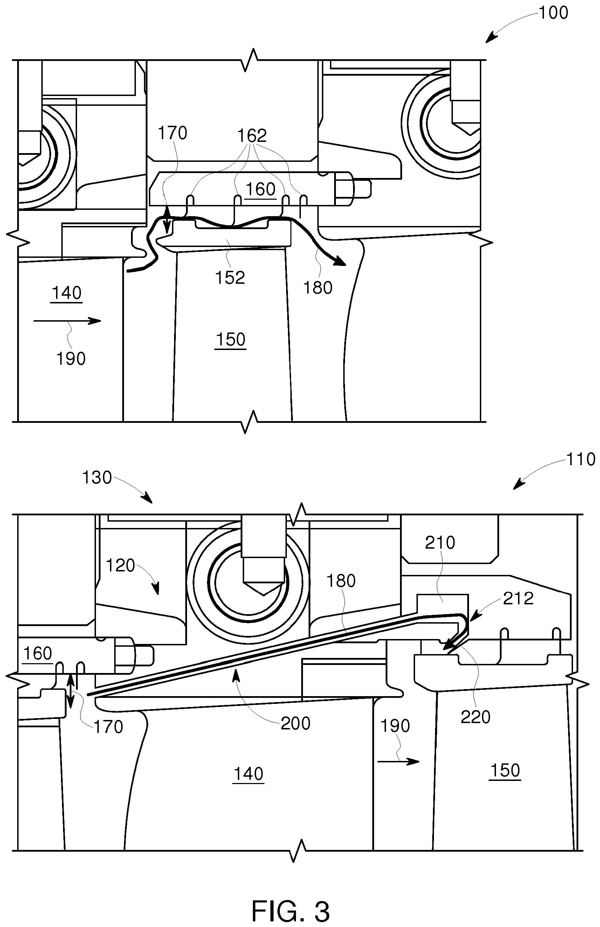

FIG. 3 depicts a schematic diagram of a portion of a steam turbine 100 with a leakage flow control system 110 as may be used herein. The leakage flow control system 110 is used to limit the leakage flow through one or more components of the steam turbine 100. The leakage flow control system 110 may be used about an outer casing 120, a diaphragm 130, or elsewhere.

The steam turbine 100 includes a number of guide vanes 140 and a number of rotor blades 150 for different stages of the turbine 100. For example, the illustrated rotor blade 150 may be a first stage rotor blade and the illustrated guide vane 140 may be a first stage guide vane. The guide vane 140 and the rotor blade 150 may be coupled to a disc or drum. Any number of stages and/or guide vanes and rotor blades may be included.

One or more, or each, of the rotor blades 150 may include a tip, an airfoil, and a root. The root may be configured to couple the rotor blade to the disc or drum of the turbine 100. The airfoil may be positioned between the root and the tip. According to the invention a tip shroud 152 is coupled to or otherwise be formed at the tip of the rotor blade 150.

The diaphragm 130 forms a partition before pressure stages in the turbine casing 120. The diaphragm 130 may hold nozzles and/or seals between stages. The diaphragm 130 may be a platform diaphragm. An extension ring 160 is coupled to a portion of the diaphragm 130. The extension ring 160 is positioned adjacent to the tip shroud 152 of the rotor blade 150. The extension ring 160 may include a number of sealing fins 162 that extend from the extension ring 160 toward the tip shroud 152.

A gap 170 is formed between the sealing fins 162 of the extension ring 160 and the tip shroud 152 of the rotor blade 150. The gap 170 may be formed so as to create a clearance for movement of the rotor blade 150 during operation of the turbine 100. During operation, a leakage flow, such as a tip leakage jet 180, flows through a portion of the turbine 100. The tip leakage jet 180 may be a portion of a mainstream flow 190. For example, the tip leakage jet 180 may flow through the gap 170 between the sealing fins 162 and/or another portion of the extension ring 160 and the rotor blade 150.

The tip leakage jet 180 may cause a reduction in efficiency and/or performance of the turbine 100. The tip leakage jet 180 may flow through the gap 170 and may reenter the mainstream flow 190. However, the tip leakage jet 180 may disrupt the mainstream flow and cause mixing losses between the leakage and mainstream flow. The tip leakage jet 180 may also increase entropy and increase incidence onto a downstream blade row.

The leakage flow control system 110 may reduce or eliminate losses caused by the tip leakage jet 180. In the example of FIG. 3, the leakage flow control system 110 includes one or more tip balance slits 200. The tip balance slit 200 is formed in the diaphragm 130 or may be in the outer casing 120. The tip balance slit 200 is a slit forming a pathway for fluid, such as the tip leakage jet 180, to flow. The tip balance slit 200 may be formed in the diaphragm 130 at a radially outward orientation. For example, as shown in FIG. 3, the tip balance slit 200 may be formed so as to create an inclined pathway for fluid to flow downstream from the gap 170. The tip balance slit 200 therefore forms a downstream path for the tip leakage jet 180. The tip balance slit 200 may be formed, in one example, by machining or otherwise removing a portion of the diaphragm and may form a circumferential or partially circumferential slot about the turbine 100.

The leakage flow control system 110 may include a chamber 210 at an end 212 of the tip balance slit 200. The chamber 210 may be a portion of the tip balance slit 200 or may be in fluid communication with the tip balance slit 200. The chamber 210 may be larger in size and/or diameter than the tip balance slit 200. The leakage flow control system 110 includes a tip balance slit outlet 220 in communication with the chamber and/or the tip balance slit 200 that is configured to reintroduce the tip leakage jet 180 to the mainstream flow 190. The tip balance slit outlet 220 is angled or oriented at the same angle or orientation, or at a different angle or orientation, than the tip balance slit 200. As shown in FIG. 3, the tip balance slit outlet 220 is angled against or partially against the mainstream flow 190.

The leakage flow control system 100 with one or more slits 200 guides the tip leakage jet 180 about the diaphragm 130 and puts positive work into turbine shrouds and provides a steam blanketing or sealing effect.

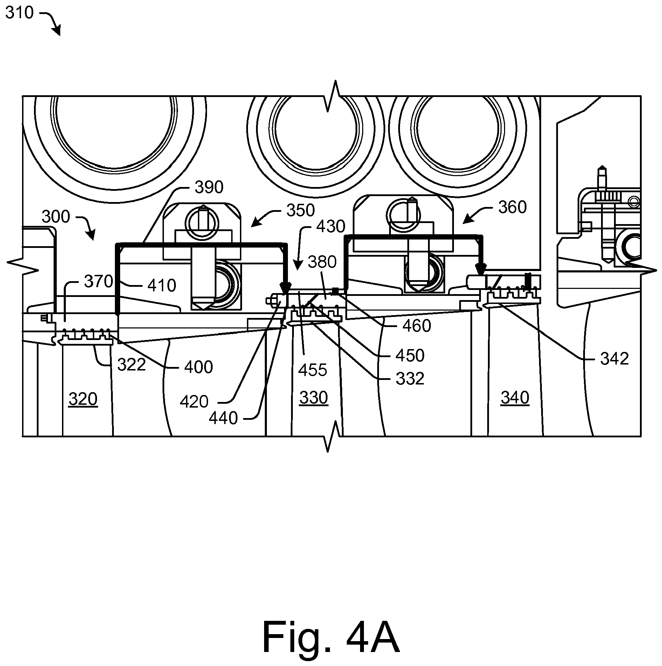

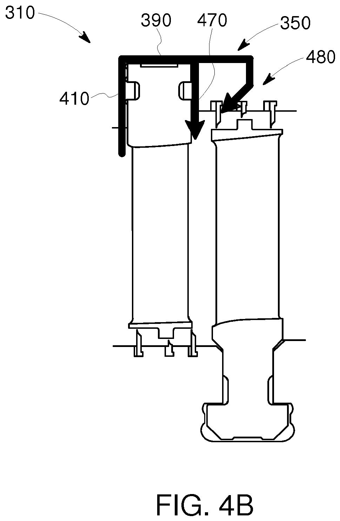

FIGS. 4A-4B illustrate another embodiment of a leakage flow control system 300 as described herein. In FIG. 4, a turbine 310 includes a first rotor blade 320 with a first shroud 322, a second rotor blade 330 with a second shroud 332, and a third rotor blade 340 with a third shroud 342. The turbine 310 may have a reaction technology blading construction. The turbine 310 includes a first diaphragm 350 between the first rotor blade 320 and the second rotor blade 330, and a second diaphragm 360 between the second rotor blade 330 and the third rotor blade 340. The second rotor blade 330 corresponds to a turbine stage that has a relatively lower pressure than a turbine stage that corresponds to the first rotor blade 320. Similarly, the third rotor blade 340 corresponds to a turbine stage that has a relatively lower pressure than a turbine stage that corresponds to the second rotor blade 330. The second rotor blade 330 is downstream of the first rotor blade 320, and the third rotor blade 340 is downstream of the second rotor blade 330.

The turbine 310 includes a first extension ring 370 that is coupled to the first diaphragm 350 adjacent to the first tip shroud 322. A second extension ring 380 is coupled to the second diaphragm 360 adjacent to the second tip shroud 332. A tip leakage jet 390 flows through a gap 400 between the first extension ring 370 and the first tip shroud 322.

The leakage flow control system 300 includes a flow path 410 through at least a portion of the first diaphragm 350. The flow path 410 may extend around the first diaphragm 350 and may be an opening or gaps between components in the turbine 310. Specifically, the flow path 410 extends from the first rotor blade 320 to the second rotor blade 330. The flow path 410 may have a full 360 degree entry.

Some or all of the flow path 410 may be formed by one or more of a crushing peg, a pillar, a slit, or a combination thereof. Crushing pegs and the like may be used to locate diaphragm heads. For example, additional gaps, slits, or holes may be formed in one or more turbine components using the crushing pegs, pillars, etc. A portion of the flow path may be formed along or by gaps on the pressure face 470 of the guide vane, which may form a first tip balance slit, while in other embodiments, a fluidic seal may be used at the extension ring adjacent the rotor blade to provide an outlet 480 for the tip leakage flow. Some embodiments may use one or the other, or both, of these configurations.

The flow path 410 may be in fluid communication with a space or chamber 420 between the second extension ring 380 and the casing and/or diaphragm. In some embodiments, the second extension ring 380 may be shortened or otherwise modified so as to reintroduce the tip leakage jet 390 into the mainstream flow. In other embodiments, a downstream section of the second extension ring 380 may be located in the casing (e.g., a spring backed gland, etc.) or may be located downstream on the diaphragm. If located downstream on the diaphragm, tip leakage slots may be used to extract the tip leakage flow 390 from the space.

Specifically, the turbine 310 includes a gap 455 between the first diaphragm 350 and the second extension ring 380. At least a portion of the tip leakage jet 390 may flow through the flow path 410 and into the gap 455.

A fluidic seal 460 may be positioned in the gap 455. In some embodiments, the fluidic seal 460 may be positioned at an end of a tip balance slit or at a downstream section of the gap 455 and/or at an outer casing of the turbine. The fluidic seal 460 may be positioned so as to prevent leakage flow from passing behind the extension ring. The fluidic seal 460 may reduce leakage flow losses and may be less prone to certain failures.

The flow path 410 is used to pass leakage flows across the first diaphragm 350. The tip leakage jet 390 may flow into the flow path 410, around the first diaphragm 350, and into the space between the second extension ring 380 and the diaphragm or casing.

One or more tip balance slits 430 are formed in the second extension ring 380 to reintroduce the tip leakage jet 390 from the space into the mainstream flow. For example, a first tip balance slit 440 may be downstream of the flow path 410 and may be configured to introduce the tip leakage jet 390 from the flow path 410 to the mainstream flow near the second flow runner 330. According to the invention, the first tip balance slit 440 is an angled tip balance slit. In other examples not belonging to the invention the first tip balance slit 440 may be a straight tip balance slit. Some embodiments may include more than one type of tip balance slit.

The leakage flow control system 400 includes a second tip balance slit, which is an angled tip balance slit 450 that is positioned adjacent to the first tip balance slit 440. The angled tip balance slit 450 is formed in the extension ring, and is configured to reintroduce the tip leakage jet against the mainstream flow. For example, the angled tip balance slit 450 may be angled so as to direct a portion of the tip leakage flow 390 upstream, or against the mainstream flow. The angled tip balance slit 450 may be downstream of the first tip balance slit 440.

The leakage flow control system 400 therefore swallows the tip leakage flow, swirl the flow onto the shroud to minimize windage losses, and to provide a steam blanketing effect. A stage efficiency gain may result.

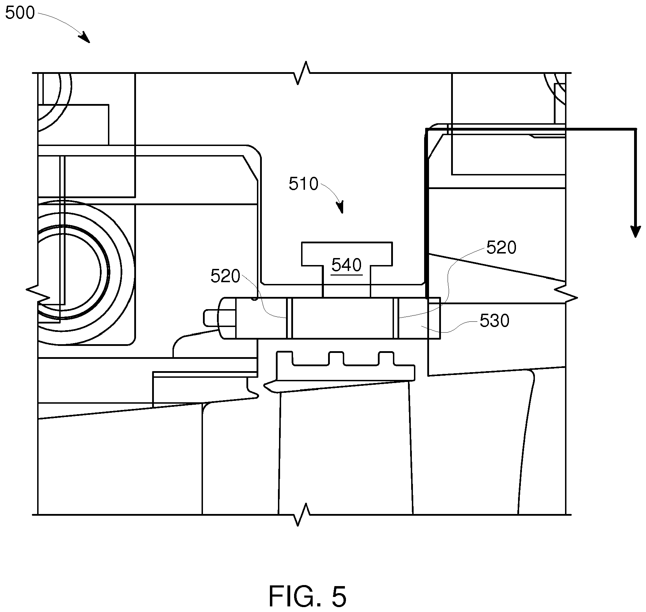

In FIG. 5, a portion of a steam turbine 500 is illustrated with a leakage flow control system 510. The leakage flow control system 510 may include one or more angled slots 520 in an extension ring 530. The extension ring 530 may be a shortened and/or simplified extension ring. The sealing feature may be included on upstream and/or downstream diaphragms to restrict interaction with a mainstream flow. A spring backed seal 540 may be positioned in the casing, which may result in slightly increased clearance due to casing distortion, but overall decrease in losses and gain in stage efficiency.

A method of controlling leakage flow in a turbine includes the features as set forth in claim 6.

As a result of the leakage flow control systems described herein, stage efficiency gains for steam turbines may be about 0.50%, with reduced mixing loss and reduced secondary loss/incidence in the following blade row. Certain embodiments may be used to retrofit existing steam turbines. The leakage flow control systems include one or more tip balance slits or holes that put positive work into turbine shrouds and provides a steam blanketing effect. The leakage flow control systems may therefore improve stage efficiency, while maintaining or improving mechanical reliability and without increasing cost or complexity of the steam turbine. Emissions may be reduced. The tip balance holes may prevent ingestion of mainstream flow, thereby increasing turbine power and/or output. Certain embodiments may be used with impulse and reaction technology blading.

It should be apparent that the foregoing relates only to certain embodiments of this application and resultant patent.

## Claims

1. A leakage flow control system (110) for a turbine comprising:
a first rotor blade (150) with a first tip shroud;
a second rotor blade (150) with a second tip shroud (152), the second rotor blade (150) positioned downstream of the first rotor blade (150) in the direction of a mainstream flow (190) through the turbine;
a first diaphragm (130) that forms a partition between pressure stages in a turbine casing (120) of the turbine;
a first extension ring (160) coupled to the first diaphragm (130) and positioned adjacent to the first tip shroud (152), the first extension ring (160) and the first tip shroud (152) forming a first gap (170) therebetween, through which a tip leakage jet (180) flows during operation;
a tip balance slit (200) formed at least partially in the first diaphragm (130), the tip balance slit (200) being in communication with the first gap (170) for receiving the tip leakage jet (180) therefrom and forming a downstream path for the tip leakage jet (180), which extends from the first rotor blade (150) to the second rotor blade (150); and
a tip balance slit outlet (220) in communication with the tip balance slit (200) and/or a chamber (210) at an end (212) of the tip balance slit (200), the tip balance slit outlet (220) configured to reintroduce the tip leakage jet (180) to the mainstream flow (190) near the second rotor blade (150), wherein the tip balance slit outlet (220) is at least partially angled against the mainstream flow (190) and configured to swirl the flow of the tip leakage jet (180) onto the second tip shroud (152) of the second rotor blade (150) to minimize windage losses, to put positive work into the second tip shroud (152), and to provide a steam blanketing effect.

2. A leakage flow control system (300) for a turbine comprising:
a first rotor blade (320) with a first tip shroud (322);
a second rotor blade (330) with a second tip shroud (332), the second rotor blade (330) positioned downstream of the first rotor blade (320) in the direction of a mainstream flow through the turbine;
a first diaphragm (350) between the first rotor blade (320) and the second rotor blade (330);
a second diaphragm (360) between the second rotor blade (330) and a third rotor blade (340);
a first extension ring (370) coupled to the first diaphragm (350) and positioned adjacent to the first tip shroud (322), the first extension ring (370) and the first tip shroud (322) forming a first gap (400) therebetween, through which a tip leakage jet (390) flows during operation;
a second extension ring (380) coupled to the second diaphragm (360) and positioned adjacent to the second tip shroud (332);
a flow path (410) formed around the first diaphragm (350), the flow path (410) being in communication with the first gap (400) for receiving the tip leakage jet (390) therefrom and forming a downstream path for the tip leakage jet (390), which extends from the first rotor blade (320) to the second rotor blade (330);
a gap (455) between the second extension ring (380) and the first diaphragm (350), the gap (455) in communication with the flow path (410) for receiving the tip leakage jet (390) therefrom, and
one or more tip balance slits (430, 440, 450) formed in the second extension ring (380) to reintroduce the tip leakage jet (390) to the mainstream flow near the second rotor blade (330);
wherein one (450) of the tip balance slits (430, 440, 450) is angled against the mainstream direction and configured to swirl the flow of the tip leakage jet (390) from the gap (455) onto the tip shroud (332) of the second rotor blade (330) to minimize windage losses, to put positive work into the tip shroud (332) of the second rotor blade, and to provide a steam blanketing effect.

3. The leakage flow control system of claim 2, wherein at least a portion of the flow path (410) comprises an opening formed by one or more of a crushing peg, a pillar, a slit, or a combination thereof.

4. The leakage flow control system of claim 2 or claim 3, further comprising a fluidic seal (460) positioned in the gap (455).

5. A steam turbine (500) comprising a leakage flow control system (110; 300) of any one of the preceding claims.

6. A method comprising:
directing a tip leakage jet (390) in a first gap (400) between a first tip shroud (322) of a first rotor blade (320) and an adjacent first extension ring (370) which is coupled to a first diaphragm (350) of a turbine;
directing the tip leakage jet (390) from the first gap (400) through a flow path (410) formed around the first diaphragm (350) to a second rotor blade (330) positioned downstream of the first rotor blade (320) in the direction of a mainstream flow through the turbine;
directing the tip leakage jet (390) from the flow path (410) into a second gap (455) between the first diaphragm (350) and a second extension ring (380) which is coupled to a second diaphragm (360) and positioned adjacent to a second tip shroud (332) of the second rotor blade (330);
directing the tip leakage jet (390) through one or more tip balance slits (430, 440, 450) formed in the second extension ring (380) and reintroducing the tip leakage jet (390) into the mainstream flow near the second rotor blade (330), wherein one (450) of the tip balance slits (430, 440, 450) being angled against the mainstream direction to swirl the flow of the tip leakage jet (390) from the second gap (455) onto the tip shroud (332) of the second rotor blade (330) to minimize windage losses, to put positive work into the tip shroud (332) of the second rotor blade (330), and to provide a steam blanketing effect.

## Patentansprüche

1. Leckageströmungskontrollsystem (110) für eine Turbine, umfassend:
eine erste Laufschaufel (150) mit einer ersten Spitzenummantelung;
eine zweite Laufschaufel (150) mit einer zweiten Spitzenummantelung (152), wobei die zweite Laufschaufel (150) in der Richtung eines Hauptstroms (190) durch die Turbine stromabwärts der ersten Laufschaufel (150) positioniert ist;
eine erste Membran (130), die eine Trennwand zwischen Druckstufen in einem Turbinengehäuse (120) der Turbine bildet;
einen ersten Verlängerungsring (160), der an die erste Membran (130) gekoppelt und angrenzend an die erste Spitzenummantelung (152) positioniert ist, wobei der erste Verlängerungsring (160) und die erste Spitzenummantelung (152) einen ersten Spalt (170) zwischen sich bilden, durch den ein Spitzenleckagestrahl (180) während des Betriebs strömt;
einen Spitzenausgleichsschlitz (200), der mindestens teilweise in der ersten Membran (130) ausgebildet ist, wobei der Spitzenausgleichsschlitz (200) mit dem ersten Spalt (170) in Verbindung steht, um den Spitzenleckagestrahl (180) davon aufzunehmen und einen Stromabwärtsweg für den Spitzenleckagestrahl (180) zu bilden, der sich von der ersten Laufschaufel (150) zur zweiten Laufschaufel (150) erstreckt; und
einen Spitzenausgleichsschlitzauslass (220), der mit dem Spitzenausgleichsschlitz (200) und/oder einer Kammer (210) an einem Ende (212) des Spitzenausgleichsschlitzes (200) in Verbindung steht, wobei der Spitzenausgleichsschlitzauslass (220) dazu ausgestaltet ist, den Spitzenleckagestrahl (180) nahe der zweiten Laufschaufel (150) wieder in den Hauptstrom (190) einzubringen, wobei der Spitzenausgleichsschlitzauslass (220) mindestens teilweise in Bezug auf den Hauptstrom (190) abgewinkelt ist und dazu ausgestaltet ist, die Strömung des Spitzenleckagestrahls (180) auf die zweite Spitzenummantelung (152) der zweiten Laufschaufel (150) zu verwirbeln, um Strömungsverluste zu minimieren, um positive Arbeit in die zweite Spitzenummantelung (152) einzubringen und um einen Dampfabdeckungseffekt bereitzustellen.

2. Leckageströmungskontrollsystem (300) für eine Turbine, umfassend:
eine erste Laufschaufel (320) mit einer ersten Spitzenummantelung (322);
eine zweite Laufschaufel (330) mit einer zweiten Spitzenummantelung (332), wobei die zweite Laufschaufel (330) in der Richtung eines Hauptstroms durch die Turbine stromabwärts der ersten Laufschaufel (320) angeordnet ist;
eine erste Membran (350), die zwischen der ersten Laufschaufel (320) und der zweiten Laufschaufel (330);
eine zweite Membran (360) zwischen der zweiten Laufschaufel (330) und einer dritten Laufschaufel (340);
einen ersten Erweiterungsring (370), der an die erste Membran (350) gekoppelt und angrenzend an die erste Spitzenummantelung (322) angeordnet ist, wobei der erste Erweiterungsring (370) und die erste Spitzenummantelung (322) einen ersten Spalt (400) zwischen sich bilden, durch den ein Spitzenleckagestrahl (390) während des Betriebs strömt;
einen zweiten Erweiterungsring (380), der an die zweite Membran (360) gekoppelt und angrenzend an die zweite Spitzenummantelung (332) angeordnet ist;
einen Strömungsweg (410), der um die erste Membran (350) herum gebildet ist, wobei der Strömungsweg (410) mit dem ersten Spalt (400) in Verbindung steht, um den Spitzenleckagestrahl (390) davon aufzunehmen und einen Stromabwärtsweg für den Spitzenleckagestrahl (390) zu bilden, der sich von der ersten Laufschaufel (320) zu der zweiten Laufschaufel (330) erstreckt;
einen Spalt (455) zwischen dem zweiten Erweiterungsring (380) und der ersten Membran (350), wobei der Spalt (455) mit dem Strömungsweg (410) in Verbindung steht, um den Spitzenleckagestrahl (390) davon aufzunehmen, und
einen oder mehrere Spitzenausgleichsschlitze (430, 440, 450), die in dem zweiten Erweiterungsring (380) ausgebildet sind, um den Spitzenleckagestrahl (390) nahe der zweiten Laufschaufel (330) wieder in den Hauptstrom einzubringen;
wobei einer (450) der Spitzenausgleichsschlitze (430, 440, 450) in Bezug auf die Hauptströmungsrichtung abgewinkelt ist und dazu ausgestaltet ist, den Strom des Spitzenleckagestrahls (390) von dem Spalt (455) auf die Spitzenummantelung (332) der zweiten Laufschaufel (330) zu verwirbeln, um Strömungsverluste zu minimieren, um positive Arbeit in die Spitzenummantelung (332) der zweiten Laufschaufel einzubringen, und um einen Dampfabdeckungseffekt bereitzustellen.

3. Leckageströmungskontrollsystem nach Anspruch 2, wobei mindestens ein Abschnitt des Strömungswegs (410) eine Öffnung umfasst, die durch eines oder mehrere von einem Quetschzapfen, einer Säule, einem Schlitz oder einer Kombination davon gebildet ist.

4. Leckageströmungskontrollsystem nach Anspruch 2 oder Anspruch 3, ferner umfassend eine Fluiddichtung (460), die in dem Spalt (455) angeordnet ist.

5. Dampfturbine (500), umfassend ein Leckageströmungskontrollsystem (110; 300) nach einem der vorhergehenden Ansprüche.

6. Verfahren, umfassend:
Leiten eines Spitzenleckstrahls (390) in einen ersten Spalt (400) zwischen einer ersten Spitzenummantelung (322) einer ersten Laufschaufel (320) und einem benachbarten ersten Erweiterungsring (370), der an eine erste Membran (350) einer Turbine gekoppelt ist;
Leiten des Spitzenleckstrahls (390) von dem ersten Spalt (400) durch einen Strömungsweg (410), der um die erste Membran (350) herum gebildet ist, zu einer zweiten Laufschaufel (330), die in der Richtung eines Hauptstroms durch die Turbine stromabwärts der ersten Laufschaufel (320) angeordnet ist;
Leiten des Spitzenleckagestrahls (390) von dem Strömungsweg (410) in einen zweiten Spalt (455) zwischen der ersten Membran (350) und einem zweiten Erweiterungsring (380), der an eine zweite Membran (360) gekoppelt und benachbart zu einer zweiten Spitzenummantelung (332) der zweiten Laufschaufel (330) angeordnet ist;
Leiten des Spitzenleckagestrahls (390) durch einen oder mehrere Spitzenausgleichsschlitze (430, 440, 450), die in dem zweiten Erweiterungsring (380) ausgebildet sind, und Wiedereinbringen des Spitzenleckagestrahls (390) in den Hauptstrom nahe der zweiten Laufschaufel (330), wobei einer (450) der Spitzenausgleichsschlitze (430, 440, 450) in Bezug auf die Hauptströmungsrichtung abgewinkelt ist, um den Strom des Spitzenleckagestrahls (390) von dem zweiten Spalt (455) auf die Spitzenummantelung (332) der zweiten Laufschaufel (330) zu verwirbeln, um Strömungsverluste zu minimieren, um positive Arbeit in die Spitzenummantelung (332) der zweiten Laufschaufel (330) einzubringen und um einen Dampfabdeckungseffekt bereitzustellen.

## Revendications

1. Système de contrôle d'écoulement de fuite (110) pour une turbine comprenant :
une première aube de rotor (150) avec un premier carénage de pointe ;
une deuxième aube de rotor (150) avec un deuxième carénage de pointe (152), la deuxième aube de rotor (150) positionnée en aval de la première aube de rotor (150) dans la direction d'un écoulement principal (190) à travers la turbine ;
un premier diaphragme (130) qui forme une séparation entre des étages de pression dans un carter de turbine (120) de la turbine ;
une première bague d'extension (160) couplée au premier diaphragme (130) et positionnée adjacente au premier carénage de pointe (152), la première bague d'extension (160) et le premier carénage de pointe (152) formant un premier intervalle (170) entre eux, à travers lequel un jet de fuite de pointe (180) s'écoule pendant le fonctionnement ;
une fente d'équilibrage de pointe (200) formée au moins partiellement dans le premier diaphragme (130), la fente d'équilibrage de pointe (200) étant en communication avec le premier intervalle (170) pour recevoir le jet de fuite de pointe (180) de celui-ci et former un trajet en aval pour le jet de fuite de pointe (180), qui s'étend depuis la première aube de rotor (150) jusqu'à la deuxième aube de rotor (150) ; et
une sortie de fente d'équilibrage de pointe (220) en communication avec la fente d'équilibrage de pointe (200) et/ou une chambre (210) à une extrémité (212) de la fente d'équilibrage de pointe (200), la sortie de fente d'équilibrage de pointe (220) configurée pour réintroduire le jet de fuite de pointe (180) dans l'écoulement principale (190) près de la deuxième aube de rotor (150), dans lequel la sortie de fente d'équilibrage de pointe (220) est au moins partiellement inclinée contre l'écoulement principal (190) et configurée pour faire tourbillonner l'écoulement du jet de fuite de pointe (180) sur le deuxième carénage de pointe (152) de la deuxième aube de rotor (150) pour minimiser des pertes par ventilation, pour mettre du travail positif dans le deuxième carénage de pointe (152), et pour fournir un effet d'obturation à la vapeur.

2. Système de contrôle d'écoulement de fuite (300) pour une turbine comprenant :
une première aube de rotor (320) avec un premier carénage de pointe (322) ;
une deuxième aube de rotor (330) avec un deuxième carénage de pointe (332), la deuxième aube de rotor (330) positionnée en aval de la première aube de rotor (320) dans la direction d'un écoulement principal à travers la turbine ;
un premier diaphragme (350) entre la première aube de rotor (320) et la deuxième aube de rotor (330) ;
un deuxième diaphragme (360) entre la deuxième aube de rotor (330) et une troisième aube de rotor (340) ;
une première bague d'extension (370) couplée au premier diaphragme (350) et positionnée adjacente au premier carénage de pointe (322), la première bague d'extension (370) et le premier carénage de pointe (322) formant un premier intervalle (400) entre eux, à travers lequel un jet de fuite de pointe (390) s'écoule pendant le fonctionnement ;
une deuxième bague d'extension (380) couplée au deuxième diaphragme (360) et positionnée adjacente au deuxième carénage de pointe (332) ;
un trajet d'écoulement (410) formé autour du premier diaphragme (350), le trajet d'écoulement (410) étant en communication avec le premier intervalle (400) pour recevoir le jet de fuite de pointe (390) de celui-ci et former un trajet en aval pour le jet de fuite de pointe (390), qui s'étend depuis la première aube de rotor (320) jusqu'à la deuxième aube de rotor (330) ;
un intervalle (455) entre la deuxième bague d'extension (380) et le premier diaphragme (350), l'intervalle (455) en communication avec le trajet d'écoulement (410) pour recevoir le jet de fuite de pointe (390) de celui-ci, et
une ou plusieurs fentes d'équilibrage de pointe (430, 440, 450) formées dans la deuxième bague d'extension (380) pour réintroduire le jet de fuite de pointe (390) dans l'écoulement principal près de la deuxième aube de rotor (330) ;
dans lequel l'une (450) des fentes d'équilibrage de pointe (430, 440, 450) est inclinée contre la direction d'écoulement principal et configurée pour faire tourbillonner l'écoulement du jet de fuite de pointe (390) de l'intervalle (455) sur le carénage de pointe (332) de la deuxième aube de rotor (330) pour minimiser des pertes par ventilation pour mettre du travail positif dans le carénage de pointe (332) de la deuxième aube de rotor, et pour fournir un effet d'obturation à la vapeur.

3. Système de contrôle d'écoulement de fuite selon la revendication 2, dans lequel au moins une partie du trajet d'écoulement (410) comprend une ouverture formée par un ou plusieurs parmi une cheville d'écrasement, un pilier, une fente, ou une combinaison de ceux-ci.

4. Système de contrôle d'écoulement de fuite selon la revendication 2 ou la revendication 3, comprenant en outre un joint fluidique (460) positionné dans l'intervalle (455).

5. Turbine à vapeur (500) comprenant un système de contrôle d'écoulement de fuite (110 ; 300) selon l'une quelconque des revendications précédentes.

6. Procédé comprenant :
la direction d'un jet de fuite de pointe (390) dans un premier intervalle (400) entre un premier carénage de pointe (322) d'une première aube de rotor (320) et une première bague d'extension (370) adjacente qui est couplée à un premier diaphragme (350) d'une turbine ;
la direction du jet de fuite de pointe (390) depuis le premier intervalle (400) à travers un trajet d'écoulement (410) formé autour du premier diaphragme (350) vers une deuxième aube de rotor (330) positionnée en aval de la première aube de rotor (320) dans la direction d'un écoulement principal à travers la turbine ;
la direction du jet de fuite de pointe (390) depuis le trajet d'écoulement (410) dans un deuxième intervalle (455) entre le premier diaphragme (350) et une deuxième bague d'extension (380) qui est couplée à un deuxième diaphragme (360) et positionnée adjacente à un deuxième carénage de pointe (332) de la deuxième aube de rotor (330) ;
la direction du jet de fuite de pointe (390) à travers une ou plusieurs fentes d'équilibrage de pointe (430, 440, 450) formées dans la deuxième bague d'extension (380) et la réintroduction du jet de fuite de pointe (390) dans l'écoulement principal près de la deuxième aube de rotor (330), dans lequel l'une (450) des fentes d'équilibrage de pointe (430, 440, 450) étant inclinée contre la direction d'écoulement principal pour faire tourbillonner l'écoulement du jet de fuite de pointe (390) depuis le deuxième intervalle (455) sur le carénage de pointe (332) de la deuxième aube de rotor (330), pour minimiser des pertes par ventilation, pour mettre du travail positif dans le carénage de pointe (332) de la deuxième aube de rotor (330), et pour fournir un effet d'obturation à la vapeur.
